# EUROPEAN PATENT APPLICATION

(11) **EP 0 743 524 A1**
(43) Date of publication of application: **20.11.1996**
(21) Application number: 95830208.5
(22) Date of filing: 17.05.1995
(51) Int. Cl.: G01N 35/00, B01L 3/00, G01N 1/34

(54) **Station for preparing cytological preparations**

(71) Applicant: COSTAR ITALIA S.r.l., Concorezzo, (Milano) (IT); Chieco,Pasquale, San Lazzaro Di Savena (Bologna) (IT); D'Errico,Ciro Roberto, San Severo (Foggia) (IT)
(72) Inventor: Chieco, Pasquale, S.Lazzaro di Savena (Bologna) (IT); D'Errico, Ciro Roberto, San Severo (Foggia) (IT)
(74) Representative: Pizzoli, Pasquale Vincenzo

(57) **Abstract**

A station for preparing cytological preparations is of the type usable to extract cells from liquid suspensions by passing the suspension through filtering means (5) permeable to the liquid medium of said suspension and impermeable to said cells to be extracted; the station includes a series of extraction units or towers (T) arranged between a suction circuit (C1) and a feeding one (C2), so as to subject the samples to be analyzed to a suction, in order to separate the liquid from the cells to be examined, alternating with inflows of a clearing fluid to free, when required, the filtering means (5) from possible occlusions; the liquid, after being separated from the cells to be examined, is collected in a tank (35), all the operations are supported by control (2) and processing (21) means to allow the most appropriate cell extraction modes.

## Description

The present invention relates to a station for preparing cytological preparations.

For laboratory tests, carried out both for clinical analyses and scientific experimental purposes, it is necessary to analyze cellular material obtained from samples of different origin; in fact, there are cytological tests carried out on samples of urine, expectorations, various effusions (such as, for example, pleural or peritoneal effusions), bronchi washings, endometrial washings, etc.

In practice, the samples used in the tests consist of suspensions of cells in liquids of various nature.

The samples taken, prior to the analysis under the microscope, must be "prepared"; i.e. they have to be properly treated through cell extraction processes. Those used until now are generally either based on centrifugation of the suspension and subsequent operations on the deposit (such, for example, inclusion in paraffin or smearing on multiple slides), or, which is the presently most used technique, based on a filtration performed by passing the samples through a porous diaphragm which is permeable to the suspension liquid but not to the cells to be extracted therefrom.

Manual processes are often used, to filter said suspensions, which substantially include arranging the samples on vessels or sets of filtering vessels connected to a hydraulic circuit, upstream of a tap. The tap, when it is opened, defines a vacuum generator suitable to cause, through a pressure lower than atmospheric pressure, a suction on the samples contained in the filtering vessels. In this way, the samples go through the filtering vessels, thus separating the liquid portion of the suspension from the cells which remain on the vessel filter.

A drawback of these processes is given by the almost completely manual execution of the operations, whereby different results may be obtained, i.e. the sample cells may be extracted in different amounts and modes according to the greater or lesser skill of the operator. Another significant drawback comes from the fact that the liquid extracted from the suspended samples is discharged through the water drain, with obvious negative consequences in the case of samples containing pathogenic elements.

A trial to "automate" the process of filtering the samples to be analyzed is disclosed in the patent publication EP-465.832, concerning a method and a machine for preparing cells for test slides.

According to what is disclosed in the above-cited document, a solution containing particles, e.g. cells, is diluted in a specific liquid medium which, in turn, is passed through a filtering membrane so as to retain thereon the cells having a size larger than the porosities of the membrane. One of the surfaces making up the membrane or filter is mechanically adhered to a slide, and a mechanism for transferring the cells provides for the application of a pneumatic signal to the filter. This machine results quite complicated and not easily usable in cytology laboratories, in that it increases the labour of the laboratory technicians and requires the use of expensive disposable material.

Therefore, the object of the present invention is to eliminate the above-mentioned drawbacks by means of a station for preparing cytological preparations, of the type usable to extract cells from liquid suspensions by passing the suspension through filtering means permeable to the liquid medium of said suspension and impermeable to said cells to be extracted, and including a series of extraction units or towers arranged between a suction circuit and a feeding one, so as to subject the samples to be analyzed, gathered in containers associable with the towers, to a suction, in order to separate the liquid from the cells to be examined, alternating with inflows of a clearing fluid to free, when required, the filtering means from possible occlusions; the liquid, after being separated from the cells to be examined, is collected in a tank; all the operations are supported by control and processing means to allow the most appropriate cell extraction modes.

By means of the present invention, it is advantageously possible to program and store the station's operating steps, by introducing the data concerning the sample to be treated and the extraction modes, thus using and processing both introduced data and data obtained from previous operations of the station.

The advantages and characteristics of the present invention will be apparent from the following detailed description, referring to the annexed drawings, which show an embodiment thereof, reported as a mere, non-limiting example, wherein:
Fig.1 illustrates a scheme concerning an embodying example of the present invention;
Fig.2 illustrates a schematic sectional longitudinal view, with some portions removed to show others, of an example of extraction unit or tower to be used in a station embodied according to the present invention;
Fig.3 illustrates a schematic top plan view of the embodying example of the tower of fig.2.

In conformity with the annexed figures, a station for preparing cytological preparations realized according to the present invention is of the type usable for extracting cells from liquid suspensions by passing the suspension through filtering means 5 permeable to the liquid medium of said suspension and impermeable to said cells to be extracted. The filtering means may consist, for example, of filters known as "Nuclepore" or of filters having similar properties of retention of the cells suspended in the examined samples.

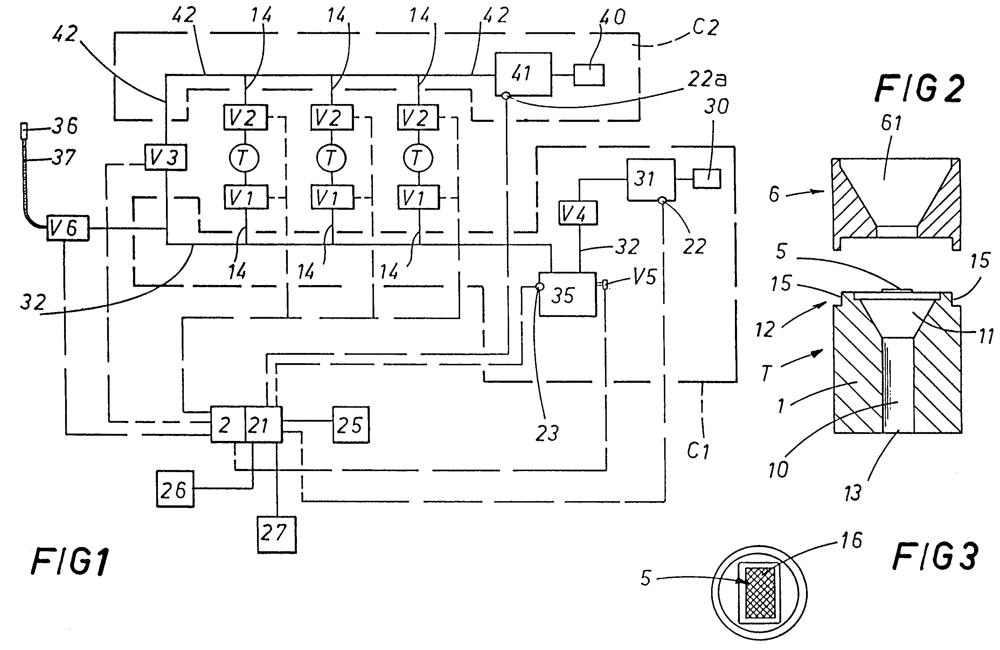

The station has a series of extraction units or towers T, of variable number and which in fig.1 are three, for example.

Towers T consist of hollow bodies 1 having therein at least one downflow channel 10; the downflow channel 10 is connected at an upstream end or inlet 11 thereof to a sampling or filtering site 12 at filters 5, and at the downstream end or outlet 13 to a link member 14, which will be described further on.

In order to support filters 5, reticulated structures 16 are provided which have a mesh size such as to allow the passage of the suspension liquid medium while being able to support filters 5 when they are subjected to a pressure action, as it will be described further on.

The units or towers T are provided with a seat 15 complementarily shaped with respect to a container 6 of the liquid suspension which is the sample to be prepared for examination.

A first suction circuit C1 is provided which includes a vacuum generator or first suction pump 30, a first chamber 31 connected thereto and defining an accumulator at a pressure lower than atmospheric pressure, and a first series of ducts 32 for the downflow of the liquid; ducts 32 are connected to the first chamber 31 on one side and to the above-mentioned downflow channels 10 on the other side, and they are suitable for transferring said liquid.

There is also a second input circuit C2 including a pressure generator or input pump 40, a second chamber 41 connected thereto and defining an accumulator at a pressure higher than atmospheric pressure, and a second series of ducts 42 suitable for transferring a pushing fluid, which may be air; ducts 42 are connected to the second chamber 41 on one side and to the above-mentioned downflow channels 10 on the other side.

The extraction units or towers T are connected in parallel to the first and second circuits C1 and C2 through a link member 14 connected to the first and second circuits C1 and C2 at the first and second series of ducts 32 and 42 by means of respective first and second valve means V1 and V2.

Units T are connected, through the downflow channel 10, to the link member 14 at a position between the first and second valve means V1 and V2.

Control means 2 are provided acting on valve means V1, V2 and suitable to cause at least the opening and closing of the latter upon activation of the first circuit C1 or of the second circuit C2, according to operating steps of the station corresponding to a suction of liquid performed by the first circuit C1, which implies the opening of the first valve means V1 and the simultaneous closing of said second valve means V2, or to an input of air in the direction opposite to suction so as to allow clearing of the filters, performed by the second circuit V2, which implies the opening of the second valve means V2 and the simultaneous closing of the first valve means V1.

In practice, there are two main operating steps performed by the station: a first step wherein the samples, contained in a tank 61 of container 6 and put into contact with filters 5, are subjected to a suction by the first circuit C1 so as to separate the liquid portion from the suspended cells, and a second step, to be performed upon clogging (or possible risk of clogging) of the filters, which can be detected as explained later on, wherein the second circuit C2 acts to subject filters 5 to the action of highly pressurised air so as to clear the filter holes from complete or partial clogging.

In order to define the sequence of the various operating steps of the station, processing means 21 are provided, such as, for example, a microprocessor electronic circuit, connected at least to the control means 2 and to first pressure detecting means 22 provided at least in said first circuit C1 and to possible second detecting means 22a provided on the second circuit C2. The first pressure detecting means 22 may consist, in practice, of a vacuum detector operating at chamber 31, capable of detecting the differences in the pressure drop in vacuum chamber or accumulator 31. The detecting means 22 are suitable to check a variation of the suction force applied by the first circuit C1 on filters 5, upon clogging or starting of clogging thereof.

This variation check may also be performed, besides at chamber 31, at the link members 14 at the outlets of towers T, so as to achieve a selective check of the single towers, in case it is desired to act on all towers simultaneously.

Upon a detected decrease of pressure in circuit C1, at the outlet of towers T, the processing means 21 switch the station from the suction step to the inflow or clearing step; in practice, the first valve means V1 are closed thus interrupting the suction by circuit C1, and the second valve means V2 are opened thus passing through the downflow channel 10, in the direction opposite to the fluid path under suction, a flow of pressurised air which clears filters 5 by passing therethrough in the direction opposite to that which caused the clogging (or starting of clogging) thereof. In general, the clearing step may have a limited duration with respect to the suction step; therefore, the station operates according to a "default" suction step periodically alternating with clearing steps.

The second detecting means 22a provided on the second circuit C2 may consist of a pressure meter mounted at the second chamber 41, giving a value corresponding to the pressure reached inside the chamber, so as to activate pump 40 when required.

A liquid collecting tank 35 is provided, arranged between the first chamber 31 and the downflow channels 10. Tank 35 is provided with second level detecting means 23, connected to the processing means 21, for the level reached by the liquid in the tank.

Furthermore, third valve means V3 are provided which connect the first circuit C1 to the second circuit C2; the third valve means V3 can be controlled by the control means 2.

Fourth valve means V4 are also provided which are arranged between the first chamber 31 and tank 35, as well as fifth valve means V5 for discharging the liquid, which are located at an outlet of tank 35; both fourth valve means V4 and fifth valve means V5 can be controlled by the control means 2, or the fourth valve means may consist of a one-way valve or may be coupled to a filter which prevents inflow of liquid or condensate towards chamber 31.

The processing means 21, upon a signal corresponding to the top level reached inside the tank and sent by said level detecting means 23, cause, through the control means 2, the closing of the first V1, second V2 and fourth valve means V4 while simultaneously opening the third V3 and fifth valve means V5. In this way, the suction action of circuit C1 is canceled and towers T are isolated from both circuits C1 and C2, and , upon connection of the two circuits C1 and C2 at the valve means V3, the emptying of tank 35 is carried out, under the thrusting action of the pressure generator 40, by passing the liquid through the fifth valve means V5.

Containers for collecting and transferring the liquid, or ducts, may be connected to the fifth valve means V5.

In order to allow the manual removal of suspension residues from the extraction units or towers 1, a suction cannula 36 is provided, at said filtering means 5, which is connected to said first suction circuit through a flexible pipe 37 and sixth valve means V6, connected to and controllable by said control means 2.

Data input means 26, which may be a keyboard or a serial interface for the connection to other processors, can be connected to the processing means 21 so as to allow the programming of the operations to be performed by the station, according to the kind of sample to be examined and to the kind of test to be carried out; these operations can also be gathered in electronic storages 27, linked to said processing means, so as to allow also the pre-setting of subsequent filtrations on the base of data obtained from previous filtering steps, and possibly transferred to an external processor for recording.

In order to facilitate the operations to be performed, all the operation steps and the control requests can be displayed by display means 25, such as, for example, a video display, which may be of the LCD type.

The thus devised invention is susceptible of various modifications and changes, all falling within the scope of the inventive idea. Moreover, all the details may be replaced by other technically equivalent members.

## Claims

1. A station for preparing cytological preparations, of the type usable for extracting cells from liquid suspensions by passing the suspension through filtering means (5) permeable to the liquid medium of said suspension and impermeable to the cells to be extracted, characterized in that it includes:
- a series of extraction units or towers (T) having on one side means (51) for supporting said filtering means (5) and leading to respective downflow channels (10);
- a first suction circuit (C1) including a vacuum generator or first suction pump (30), a first chamber (31) connected thereto and defining an accumulator at a pressure lower than atmospheric pressure, a first series of ducts (32) connected to said first chamber (31) on one side and to said downflow channels (10) on the other side, and suitable for transferring said liquid.
- a second feeding circuit (C2) including a pressure generator or inflow pump (40), a second chamber (41) connected thereto and defining an accumulator at a pressure higher than atmospheric pressure, a second series of ducts (42), connected to said second chamber (41) on one side and to the said downflow channels (10) on the other side, and suitable for transferring a thrusting fluid;
- said series of extraction units or towers (T) being connected in parallel to said first (C1) and second (C2) circuits through a link member (14) connected to said first (C1) and second (C2) circuits at said first (32) and second (42) series of ducts by means of respective first (V1) and second (V2) valve means, the units (T) consisting of a hollow body (1) having therein at least said downflow channel (10), said downflow channel (10) being connected at an upstream end or inlet (11) thereof to a sampling or filtering site (12) at said filtering means (5), and to said link member (14) at the downstream end or outlet (13), in a point between said first (V1) and second valve means (V1, V2);
- control means (2) for said valve means (V1, V2) being provided and suitable to cause at least the opening and closing of the latter upon activation of said first (C1) or of said second (C2) circuit, according to operating steps of the station corresponding to a suction of said liquid performed by said first circuit (C1), which implies the opening of said first valve means (V1) and the simultaneous closing of said second valve means (V2), or to an inflow of fluid in the direction opposite to suction, so as to allow clearing of said filtering means, performed by said second circuit (V2), which implies the opening of said second valve means (V2) and the simultaneous closing of said first valve means (V1);
- processing means (21) being provided, connected at least to said control means (2) and to first pressure detecting means (22) provided at least in said first circuit (C1), suitable to define the sequence of the operating steps of the station according at least to the values detected by said detecting means (22).

2. A station for preparing cytological preparations according to claim 1, characterized in that it includes:
- a tank (35) for collecting said liquid, arranged between said first chamber (31) and said downflow channels (10), and provided with second level detecting means (23), connected to said processing means (21), for the level reached by tile liquid in said tank;
- third valve means (V3) which connect said first circuit (C1) to the second circuit (C2) and can be controlled by said control means (2);
- fourth valve means (V4) arranged between said first chamber (31) and said tank (35), and controllable by said control means (2);
- fifth valve means (V5) for discharging the liquid, located at an outlet of said tank (35) and connected to said control means (2); said processing means (21), upon a signal corresponding to the top level reached inside the tank and sent by said level detecting means (23), causing, through said control means (2), a closing of said first (V1), second (V2) and fourth valve means (V3) while simultaneously opening said third (V3) and fifth valve means (V5), so that an emptying of said tank (35) is carried out, under the thrusting action of said pressure generator (40), by passing the liquid through said fourth valve means (V4).

3. A station for preparing cytological preparations according to claim 1, characterized in that it includes a suction cannula (36) connected to said first suction circuit through a flexible pipe (37), and sixth valve means (V6), connected to and controllable by said control means (2), suitable to allow the manual removal of suspension residues from said series of extraction units or towers (1), at said filtering means (5).

4. A station for preparing cytological preparations according to claim 1, characterized in that said means (51) for supporting said filtering means (5) consist of reticulated structures (16).

5. A station for preparing cytological preparations according to claim 1, characterized in that said units or towers (1) are provided with a seat (15) complementarily shaped with respect to a container (2) of said liquid suspension.

6. A station for preparing cytological preparations according to the preceding claims and according to what has been described and illustrated with reference to the figures of the enclosed drawings and for the mentioned purposes.
